Europäisches Patentamt

(19) European Patent Office

Office européen des brevets

(11) Veröffentlichungsnummer : **0 188 203**
**B1**

(12) EUROPÄISCHE PATENTSCHRIFT

(45) Veröffentlichungstag der Patentschrift :
07.06.89

(51) Int. Cl.⁴ : **C 01 B 31/12**

(21) Anmeldenummer : **86100097.4**

(22) Anmeldetag : **07.01.86**

(54) **Verfahren zur Herstellung von Aktivkohlen.**

(30) Priorität : **15.01.85 DE 3501073**

(43) Veröffentlichungstag der Anmeldung :
**23.07.86 Patentblatt 86/30**

(45) Bekanntmachung des Hinweises auf die Patenterteilung : **07.06.89 Patentblatt 89/23**

(84) Benannte Vertragsstaaten :
**BE DE FR GB IT NL**

(56) Entgegenhaltungen :
**DE--C-- 408 926**
**FR--A-- 509 287**
**FR--A-- 565 698**

(73) Patentinhaber : **BAYER AG**
**D-5090 Leverkusen 1 Bayerwerk (DE)**

(72) Erfinder : **Bürger, Alex, Dr.**
**Roggendorfstrasse 59**
**D-5000 Koeln 80 (DE)**
Erfinder : **Thom, Karl-Friedrich, Dr.**
**Krahnen-Strasse 3**
**D-5000 Koeln 80 (DE)**
Erfinder : **Schmidt, Peter, Dr.**
**Drosselweg 6**
**D-5090 Leverkusen 3 (DE)**

EP 0 188 203 B1

**Beschreibung**

Die vorliegende Erfindung betrifft ein Verfahren zur Herstellung von Aktivkohlen durch Aktivierung von C-haltigen Brennstoffen mit Phosphorsäure bei erhöhten Temperaturen.

Die chemische Aktivierung von C-haltigen Brennstoffen, wie z. B. Holz, Stroh, Nußschalen, Bagasse, Lignit, Torf usw., mit Phosphorsäure für die Herstellung von Entfärbungskohlen ist bekannt.

Bei einem solchen Aktivierungsverfahren handelt es sich nicht — wie bei der Wasserdampfaktivierung — um einen direkten Eingriff in das Kohlenstoffgitter, sondern primär um einen Dehydratisierungsvorgang, als dessen Endprodukt sekundär das aktive Kohlenstoffgerüst gebildet wird.

Es ist bekannt, bei der Wasserdampfaktivierung Rohmaterialien und/oder Rohprodukte, einer Voroxidation durch Behandeln mit Sauerstoff, z. B. mit Luft, bei Temperaturen unter ihrer Entzündungstemperatur zu unterziehen.

Die üblichen Temperaturen, bei denen der Voroxidationsvorgang — beispielsweise für Steinkohlen — in technisch tragbaren Zeiten durchzuführen ist, liegen bei 200 bis 250 °C.

Bei diesen Temperaturen tritt jedoch bei den rezenten Brennstoffen bereits eine sehr erhebliche thermische Zersetzung ein, und zwar noch bevor der Oxidationsvorgang in nennenswertem Maße anläuft. Durch diese Zersetzung des Materials wird die chemische und physikalische Struktur der Ausgangsstoffe so verändert, daß die anschließende chemische Aktivierung andersartig und auch zögernder angreift als es bei nicht voroxidiertem Material der Fall ist. Aktivkohlen aus einem solchen thermisch vorbehandelten Ausgangsstoff erreichen nicht einmal die Qualität eines üblichen Handelsproduktes.

Dies steht im Einklang mit der Tatsache, daß schon Temperaturen von ca. 100 °C, d. h. scharfes Trocknen, ausreichen, um die zum Teil kolloide Natur dieser genannten rezenten Brennstoffe irreversibel zu zerstören und damit die Bedingungen für den Aufschluß durch chemische Aktivierung zu verändern. Der Aufschluß am unveränderten Zellgerüst der Ausgangsmaterialien ist aber wesentlich mitbestimmend für die Qualität des Endproduktes. Der Vorteil, den ein in üblicher Weise voroxidiertes Material an sich bietet, wurde somit bei leicht zersetzlichen Rohstoffen für die chemische Aktivierung auf Zellulose-, Torf- oder Lignitbasis bisher nicht in zufriedenstellender Weise genutzt.

Die Erfahrung hat gezeigt, daß chemische Aktivate, d. h. Aktivkohlen durch chemische Aktivierung, welche aus nicht voroxidierten Rohstoffen gewonnen wurden, leichter mit Luftsauerstoff reagieren können als solche Aktivate, bei deren Herstellung von voroxidierten Rohstoffen ausgegangen wurde. Die erhöhte Reaktionsbereitschaft gegenüber Sauerstoff führt bei chemischen Aktivaten auf Basis nicht voroxidierter Rohstoffe zu Erschwernissen in ihrer Handhabung.

Die Aufgabe der vorliegenden Erfindung ist es daher, ein Verfahren zur Verfügung zu stellen, welches die Herstellung einfach handhabbarer Aktivkohlen mit gleichzeitig guter Entfärbungsleistung ermöglicht.

Überraschenderweise wurde nun gefunden, daß alle diese Forderungen erfüllt werden, wenn man die Maische aus C-haltigen Rohstoffen und Phosphorsäure vor der Aktivierung einer schnellen Voroxidation und einer schnellen Dehydration unterwirft.

Gegenstand der vorliegenden Erfindung ist somit ein Verfahren zur Herstellung von Aktivkohlen durch Aktivierung von C-haltigen Brennstoffen mit Phosphorsäure bei erhöhten Temperaturen, wobei die aus Brennstoffen und Phosphorsäure und Wasser bestehende Maische vor der eigentlichen Aktivierung bei Temperaturen zwischen 250 und 550 °C, vorzugsweise zwischen 350 und 550 °C, einer schnellen thermischen Vorbehandlung bei Temperaturen von 80 bis 250 °C in Gegenwart von Wasserdampf und Sauerstoff unterzogen wird, wobei der Sauerstoffgehalt in der Gasphase 3 bis 15 Volumenprozent und der Wasserdampfgehalt mindestens 20, vorzugsweise 25 bis 40 Volumenprozent beträgt und die Aufheizung auf die Endtemperatur innerhalb von weniger als 30 Minuten erfolgt.

Auf diese Weise gelingt es, aus konventionellen Maischen auf Basis Phosphorsäure und C-haltigen Brennstoffen Aktivkohlen mit vorzüglicher Entfärbungsleistung herzustellen, die ohne zusätzliche Maßnahmen gefahrlos auch in Gegenwart von Luftsauerstoff gehandhabt, gelagert und transportiert werden können.

Die Herstellung der Aktivkohle nach dem erfindungsgemäßen Verfahren verläuft in der Art, daß das Ausgangsmaterial, etwa grobes Sägemehl, Hobelspäne, körniger oder gemahlener Torf oder ähnliche kohlenstoffhaltige Stoffe, mit der notwendigen Menge Phosphorsäure vermengt wird. Die Phosphorsäure soll dabei so konzentriert sein, daß bei dem gewünschten Maischverhältnis die Maische nicht klebend feucht, sondern eher trocken bröckelig ist. In der Regel wird dabei mit einem Maischverhältnis $P_2O_5$ zu lufttrockener kohlenstoffhaltiger Substanz von 1 : 0,5 bis 1 : 1,5 Gewichtsprozent und einem Wasseranteil von 20 bis 35 Gewichtsprozent, bezogen auf frische Maische, gearbeitet.

Diese Maische wird unmittelbar in ein Trockenaggregat eingespeist, in dem z. B. durch Spülung mit heißen Gasen, z. B. heißer Luft oder Verbrennungsgasen usw. möglichst schnell, d. h. innerhalb von höchstens 30 Minuten, der Wassergehalt der Maische auf weniger als 15 %, vorzugsweise auf unter 6 % gesenkt wird.

Bevorzugt wird das erfindungsgemäße Verfahren dabei so ausgeführt, daß während der thermischen Vorbehandlung der Sauerstoffgehalt in der Gasphase 3 bis 15 Volumenprozent und der Wasserdampfgehalt mindestens 20, vorzugsweise 25 bis 40, Volumenprozent beträgt. Die Maische soll dabei — je nach den angestrebten Eigenschaften der Kohle — auf eine Endtemperatur von 120 bis 250 °C aufgeheizt werden. Die Schnelligkeit des Wasserentzugs ist wesentlich für den gewünschten Effekt, so daß durch mehr oder minder schockartiges Trocknen der Prozeß und damit die Porenstruktur der Fertigkohle weitgehend gesteuert werden kann. Besonders günstige Ergebnisse erreicht man dadurch, daß die Maische während der thermischen Vorbehandlung auf einen Wassergehalt von weniger als 15 % getrocknet wird. Nach der schockartigen Trocknung wird das zu aktivierende Material bei Temperaturen von 350° bis 550 °C aktiviert, wozu je nach dem verwendeten Material etwa 0,5 bis 3 Stunden notwendig sind.

Die Aktivierung erfolgt unter direkter oder indirekter Beheizung in Tiegel-, Muffel-, Drehrohr- oder eventuell in Wirbelschichtöfen. Die Vorbehandlung kann in denselben Vorrichtungen durchgeführt werden, so daß die gesamte Aktivierung weitgehend kontinuierlich erfolgen kann.

Eine weitere Ausgestaltung des erfindungsgemäßen Verfahrens besteht darin, daß das nach der eigentlichen Aktivierung erhaltene Material mit einer bis zu 50 %igen Phosphorsäure und anschließend mit Wasser gewaschen, danach von der Flüssigkeit getrennt wird. Eine weitere Verbesserung der Materialeigenschaften wird dann dadurch erzielt, daß das Material nach der Wäsche neutralisiert und mit entsalztem Wasser behandelt wird.

In einer bevorzugten Ausführungsform des erfindungsgemäßen Verfahrens wird das aktivierte Gut in vorgelegter, verdünnter Phosphorsäure suspendiert, in einer Filtrationsvorrichtung abgetrennt und danach in einer Waschstraße stufenweise oder kontinuierlich im Gleich- oder Gegenstrom zwecks Rückführung der Phosphorsäure in den Prozeß mit Phosphorsäure verschiedener Konzentration extrahiert und schließlich mit voll entsalztem Wasser gewaschen. Der Phosphatgehalt des so gewonnenen Produktes liegt bei 4 bis 8 Gew.-%, bezogen auf die Trockensubstanz. Anschließend erfolgt, z. B. in einem Waschturm, eine Gegenstromwäsche mit 35 °C warmem Wasser, z. B. Trinkwasser, danach die Neutralisation durch Zusatz von verdünnter, z. B. 1 bis 20 %iger $Na_2CO_3$-Lösung und dann eine Nachwäsche mit voll entsalztem Wasser.

Das erhaltene Aktivat wird dann nach bekannter Weise entwässert, gemahlen und getrocknet.

Im folgenden wird die Erfindung beispielhaft erläutert, ohne daß darin eine Einschränkung zu sehen ist.

Beispiel 1

1a) 250 g Sägespäne, naturfeucht = 178 g Trockensubstanz wurden mit 475 g einer 50 %igen Phosphorsäure = 172 g $P_2O_5$ verrührt. Es resultierte ein Maischverhältnis 1 : 0,966.

Diese Maische wurde in einem Trockenschrank flach ausgebreitet und innerhalb von 20 Minuten auf 170 °C gebracht.

$H_2O$-Gehalt kleiner als 0,1 %.

Diese getrocknete Maische wurde in einem abgedeckten Tiegel zum Aktivieren 15 Minuten auf 430 bis 450 °C erhitzt und nach dem Erkalten mit Wasser gründlich gewaschen, getrocknet und gemahlen.

1b) Die gleiche Maische wie in Beispiel 1a) wurde in einem abgedeckten Tiegel unter Durchleiten von 1 l/min Wasserdampf mit 6 Volumentprozent $O_2$ innerhalb von 20 Minuten durch Außenheizung auf 170 °C gebracht. $H_2O$-Gehalt der Maische nach dieser Behandlung = 5,5 %.

Das Aktivieren und Aufarbeiten erfolgte wie bei Beispiel 1a).

1c) Die gleiche Maische wie in Beispiel 1a) wurde unter Inertgas im Vakuum getrocknet. Restwassergehalt kleiner als 0,1 %.

Weitere Aufarbeitung wie bei Beispiel 1a).

Die Aktivate aus den nach den Beispielen 1a)-c) vorbehandelten Maischen erbrachten folgende Entfärbungsleistungen :

Tabelle 1

| Beispiel | 1a) | 1b) | 1c) |
|---|---|---|---|
| Melassezahl bei Ext. 0,38 genannt "Melassefaktor" (MF) | 2,03 | 0,84 | 2,60 |
| Melassezahl bei Ext. 0,10 genannt "Melassewert" (MW) | 1,45 | 0,87 | 2,30 |
| Melassezahl bei Ext. 0,03 | 1,08 | 0,90 | 1,70 |
| Melassezahl bei Ext. 0,02 | 0,98 | 0,91 | 1,50 |

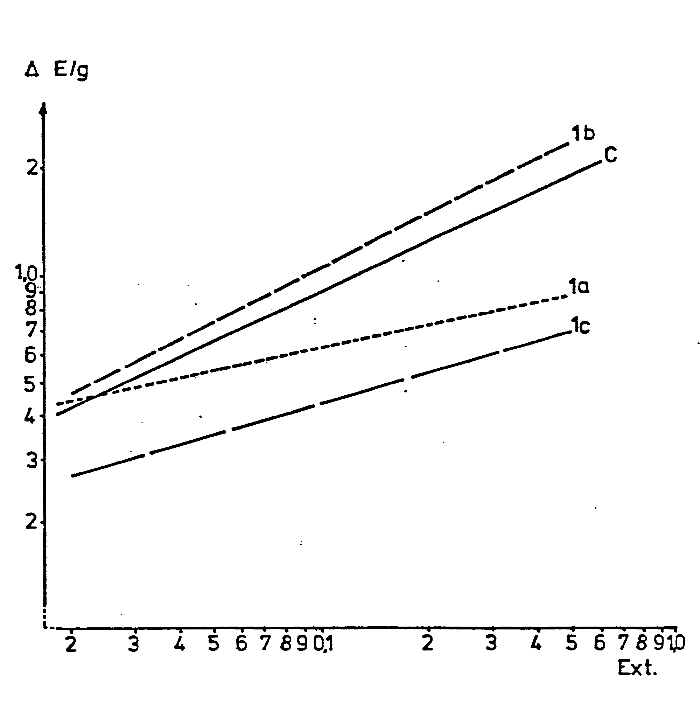

Den Verlauf der Entfärbungskurven zeigt die Figur 1, auf der die Melasseisothermen der Kohlen gemäß den Beispielen 1a)-c) gegen die Standardkohle (C) aufgetragen wurden.

Die Auswertung geschieht nach ANSI/ASTM D 2355 (Reapproved 1976) S. 339-342.

### Beispiel 2

1,070 kg Sägespäne, feucht = 860 kg Trockensubstanz wurden mit 50 %iger Phosphorsäure (Maischverhältnis : 1 : 0,90) angemaischt und unter Überleiten von Wasserdampf mit 25 Volumenprozent Luftzusatz innerhalb von 20 min auf 150 °C erhitzt. Der Restwassergehalt betrug 8,3 %. Dieses Material wurde im Tiegelofen innerhalb von 3 Stunden ohne Luftzutritt auf 450 °C erhitzt und 30 Minuten auf dieser Temperatur gehalten. Das Rohaktivat wurde mit 50 %iger $H_3PO_4$ und Wasser ausgewaschen, mit 20 %iger $Na_2CO_3$-Lösung auf pH 5-6 eingestellt und mit vollentsalztem Wasser erneut gewaschen. Anschließend erfolgte Mahlung auf eine Körnung von kleiner als 0,07 mm und Trocknung.

Die Eigenschaften der erhaltenen Aktivate sind in Tabelle 2, Spalte 2a und 2b beschrieben. Die Produkte weisen Selbstentzündungstemperaturen auf, die wesentlich höher liegen als die handelsüblichen chemischen Aktivate A, B bzw. C (Tabelle 2).

### Beispiel 3

50 g gemahlene Aktivkohle C (sh. Tabelle 2) werden in 5 l ca. 35 °C warmen Trinkwasser suspendiert, filtriert und erneut suspendiert. Mit 20 %iger $Na_2CO_3$-Lösung wird ein pH-Wert von 5 eingestellt. Danach wird abfiltriert und der Filterkuchen mit 2 l vollentsalztem Wasser gewaschen. Das bei 110 °C getrocknete, pulverige, gemahlene Aktivat (C') zeigte bei der Prüfung auf exotherme Reaktion mit Luftsauerstoff eine Entzündungstemperatur von 190 °C.

(Siehe Tabelle 2 Seite 5 f.)

## Tabelle 2

| Beispiel 2 | | | Handelsübliche chemische Aktivate | | | Beispiel 3 |
|---|---|---|---|---|---|---|
| | 2a | 2b | A | B | C | C' |
| MF | 1,0 | 0,9 | 0,9 | 0,8 | 0,9 | |
| Asche | 2,7 | 2,6 | 3,1 | 5,4 | 1,4 | |
| pH | 5,7 | 6,3 | 2,0 | 7,0 | 2,3 | |
| $PO_4^{---}$ | 1,90 | 1,65 | 7,3 | 4,2 | 5,7 | 2,9 |
| Selbstentz. mit Luft-$O_2$ exotherm ab | 200°C | 215°C | 120°C | 155°C | 120°C | 190°C |

Als Vergleichskohlen wurden folgende eingesetzt :
A = Handelsware CNB, 1984, der Firma Norit N.V., Niederlande
B = Spezialtyp CNB, 1984, der Firma Norit N.V., Niederlande
C = Handelsware CAB, 1984, der Firma Norti N.V., Niederlande
D = Standardcarboraffin C, 1984, der Firma BAYER AG

EP 0 188 203 B1

**Patentansprüche**

1. Verfahren zur Herstellung von Aktivkohlen durch Aktivierung von C-haltigen Brennstoffen mit Phosphorsäure bei erhöhten Temperaturen, dadurch gekennzeichnet, daß die aus Brennstoffen und Phosphorsäure und Wasser bestehende Maische vor der eigentlichen Aktivierung bei Temperaturen zwischen 250 und 550 °C, vorzugsweise 350 und 550 °C, einer schnellen thermischen Vorbehandlung bei Temperaturen von 80 bis 250 °C in Gegenwart von Wasserdampf und Sauerstoff unterzogen wird, wobei der Sauerstoffgehalt in der Gasphase 3 bis 15 Volumenprozent und der Wasserdampfgehalt mindestens 20, vorzugsweise 25 bis 40 Volumenprozent beträgt und die Aufheizung auf die Endtemperatur innerhalb von weniger als 30 Minuten erfolgt.

2. Verfahren gemäß Anspruch 1, dadurch gekennzeichnet, daß die Maische während der thermischen Vorbehandlung auf einen Wassergehalt von weniger als 15 % getrocknet wird.

3. Verfahren gemäß einem der Ansprüche 1 oder 2, dadurch gekennzeichnet, daß das nach der eigentlichen Aktivierung erhaltene Material mit einer bis zu 50 %igen Phosphorsäure und anschließend mit Wasser gewaschen, nach der Wäsche neutralisiert und danach mit entsalztem Wasser behandelt, sodann von der Flüssigkeit getrennt und getrocknet wird.

**Claims**

1. A process for the production of active carbons by activation of C-containing fuels with phosphoric acid at elevated temperatures, characterized in that, before actual activation at temperatures of from 250 to 550 °C and preferably at temperatures of from 350 to 550 °C, the mash consisting of fuels and phosphoric acid and water is subjected to a rapid thermal pretreatment at temperatures of 80 to 250 °C in the presence of steam and oxygen, the oxygen content in the gas phase being from 3 to 15 % by volume and the steam content being at least 20 and preferably from 25 to 40 % by volume and heating to the final temperature taking place in less than 30 minutes.

2. A process as claimed in claim 1, characterized in that the mash is dried to a water content of less than 15 % during the thermal pretreatment.

3. A process as claimed in claim 1 or 2, characterized in that the material obtained after the actual activation is washed with an up to 50 % phosphoric acid and then with water, neutralized after washing and then treated with deionized water, subsequently separated from the liquid and dried.

**Revendications**

1. Procédé de production de charbons actifs par activation de combustibles contenant du carbone avec de l'acide phosphorique à des températures élevées, caractérisé en ce que le magma constitué de combustibles et d'acide phosphorique et d'eau est soumis, avant l'activation proprement dite, à des températures comprises entre 250 et 550 °C, de préférence entre 350 et 550 °C, à un prétraitement thermique rapide à des températures de 80 à 250 °C en présence de vapeur d'eau et d'oxygène, la teneur en oxygène de la phase gazeuse ayant une valeur de 3 à 15 % en volume et la teneur en vapeur d'eau ayant une valeur d'au moins 20 et, de préférence, de 25 à 40 % en volume et le chauffage étant effectué jusqu'à la température finale en une période de moins de 30 minutes.

2. Procédé suivant la revendication 1, caractérisé en ce que le magma est séché pendant le prétraitement thermique jusqu'à une teneur en eau de moins de 15 %.

3. Procédé suivant l'une des revendications 1 ou 2, caractérisé en ce que la matière obtenue après l'activation proprement dite est lavée avec un acide phosphorique de teneur allant jusqu'à 50 %, puis avec de l'eau, neutralisée après le lavage, puis traitée avec de l'eau déminéralisée, après quoi elle est séparée du liquide et séchée.